# EUROPÄISCHE PATENTSCHRIFT

(11) **EP 2 943 061 B1**
(45) Veröffentlichungstag und Bekanntmachung des Hinweises auf die Patenterteilung: **06.11.2019**
(21) Anmeldenummer: 14706253.3
(22) Anmeldetag: 14.01.2014
(51) Int. Cl.: A01M 1/04, A01M 1/14

(54) **ANORDNUNG ZUM ANLOCKEN VON INSEKTEN**
ARRANGEMENT FOR ATTRACTING INSECTS
DISPOSITIF POUR ATTIRER LES INSECTES

(30) Priorität: 14.01.2013 AT 272013
(43) Veröffentlichungstag der Anmeldung: 18.11.2015
(73) Patentinhaber: WITASEK Pflanzenschutz GmbH, 9560 Feldkirchen (Ktn.) (AT)
(72) Erfinder: WITASEK, Peter, A-9560 Feldkirchen (AT); BEDNARZ, Bartlomiej, 30-408 Krakau (PL)
(74) Vertreter: Beer & Partner Patentanwälte KG
(86) Internationale Anmeldenummer: PCT/AT2014/000005
(87) Internationale Veröffentlichungsnummer: WO 2014/107753

(56) Entgegenhaltungen:
- EP-A1- 1 738 645
- EP-A1- 2 401 912
- CH-A- 255 022
- DE-A1-102009 006 230
- JP-A- 2004 242 584
- US-A- 5 205 064
- US-B1- 6 568 124

## Beschreibung

Die Erfindung betrifft eine Anordnung zum Anlocken von Insekten mit den Merkmalen des Anspruchs 1.

Für das Anlocken und insbesondere Fangen sowie gegebenenfalls Töten von Insekten sind verschiedene Einrichtungen und Fallen ("Insektenfallen") bekannt. Unter bekannten Fallen sind als Beispiele zu nennen Schlitzfallen, Borkenkäfer-Schlitzfallen, Trocken- oder Nass-Fallen mit Prallflächen, Segmenttrichterfallen, Fallenlampions, Klebefallen mit dreiseitigem, klebrigen Prisma, Flügelfallen-Klebefallen und Insektenfallen mit pyramidenförmigem Netz.

Um das Anlocken von Insekten zu verbessern, werden bekannten Fallen häufig Botenstoffe (Semiochemikalien, wie z.B. Pheromone) zugeordnet.

Problematisch ist es, dass Botenstoffe alleine nicht genügen, mit bekannten Fallen Insekten hinreichend wirksam anzulocken.

Es ist zum Verbessern der Insekten anlockenden Wirkung schon vorgeschlagen worden, elektromagnetische Strahlung abgebende Quellen zu verwenden.

Die WO 2006/121346 A beschreibt eine Insektenfalle mit "Anlockeinrichtung", die eine im Inneren der Falle angeordnete IR-Quelle aufweist. So sollen Insekten in einen Bereich der Falle gelockt werden, aus dem sie nicht wieder heraus können. Die IR-Quelle kann eine Heizeinrichtung oder eine LED sein. Vorzugsweise sind mehrere IR-Quellen vorgesehen, die IR-Strahlung veränderlich abgeben. Die IR-Quelle kann mit einer Lichtquelle, insbesondere für UV-Licht oder sichtbares Licht, kombiniert sein.

Aus der US 5,205,064 A ist eine Pheromon-Falle bekannt, die mit IR- und UV-Strahlung abgebenden Quellen ausgerüstet ist. Die IR- und UV-Quellen sind im Inneren der Falle untergebracht und durch die Gitter sichtbar.

Die CH 666 789 A schlägt zum Anlocken von Insekten eine UV-Quelle in Form einer Gasentladungslampe vor. Das UV-Licht soll ein Maximum bei 10 mm haben. Zusätzlich soll IR-Strahlung abgegeben werden.

In der US 6,568,124 B ist eine Vorrichtung zum Töten von Insekten geoffenbart, die mit einer Heizung ausgestattet ist, die animalische Wärme simuliert. Hierzu ist im Inneren der Vorrichtung eine Heizeinrichtung vorgesehen, die durch Gebläse erzeugte Luftströme erwärmt.

CH 255 022 A beschreibt eine Einrichtung zum Anlocken und Fangen von Insekten, insbesondere Maikäfern. Die Einrichtung umfasst einen schirmartigen Reflektor. Am unteren Rand des Reflektors ist ein Fangsack vorgesehen, in den die angelockten Insekten fallen sollen. Vorgesehen ist eine Lampe mit einer gewöhnlichen Glühbirne, die den Reflektor anstrahlt, so dass die Maikäfer "beim abendlichen Schwärmen" angelockt werden und vom Reflektor in den Fangsack fallen sollen. Dies soll durch einen Brausestrahl, der die Käfer abschreckt, unterstützt werden.

Dieses Dokument offenbart eine Quelle für Licht, die auf einen Reflektor gerichtet ist.

Der Reflektor ist aber nicht Teil einer Insektenfalle, sondern über dieser (-> Fangsack) angeordnet.

Eine Einschränkung auf das Reflektieren eines Teils der auftreffenden Strahlung lehrt CH 255 022 A nicht.

JP 2004-242584 A lehrt, dass das Licht einer Quelle vom Boden einer mit Flüssigkeit gefüllten Wanne reflektiert werden soll. Die Wanne soll aus rostfreiem Stahl bestehen und das auftreffende Licht uneingeschränkt reflektieren. Oberhalb der Lichtquelle ist eine Abdeckung vorgesehen, damit UV-Licht nur zum Behälter mit der Flüssigkeit hin tritt.

EP 1 900 280 A1 offenbart eine Anordnung umfassend eine Schlitzfalle mit Schlitzen und einen Auffangbehälter.

Der Erfindung liegt die Aufgabe zugrunde, eine derartige Anordnung weiterzuentwickeln, mit der das Anlocken von Borkenkäfern und in weiterer Folge beispielsweise das Fangen und/oder Töten derselben in Fallen verbessert wird.

Gelöst wird diese Aufgabe erfindungsgemäß mit einer Anordnung, welche die Merkmale von Anspruch 1 aufweist.

Bevorzugte und vorteilhafte Ausgestaltungen der Erfindung sind Gegenstand der Unteransprüche.

Anders als bei bekannten Anordnungen ist die elektromagnetische Strahlung abgebende Quelle bei der erfindungsgemäßen Anordnung nicht an oder in der Einrichtung zum Anlocken von Insekten angeordnet, sondern mit Abstand von dieser Einrichtung.

Im Gegensatz hierzu wurden bisher Insekten v.a. mit Botenstoffen (Semiochemikalien, wie z.B. Pheromonen) oder mit direkten Lichtquellen angelockt. Sie wurden zu einem Fallensystem oder einer abtötenden Quelle (z.B. Insektizidnetz) hingelockt. Bei einem Fallensystem werden die Insekten in der Falle gefangen (z.B. Schlitzfallen, Segmenttrichterfallen, Klebefallen, Fallenlampions, Netzfallen, Lichtfallen ...), bei abtötenden Einrichtungen spricht man von attract-and-kill-Systemen (z.B. Insektizidnetze, -fallen).

Die Offenbarung betrifft das Anlocken von Insekten (wie z.B. Borkenkäfer) mit Botenstoffen (Semiochemikalien bzw. Pheromone, Allelochemikalien, Kairomone, Allomone), die auf die Insekten anlockend wirken (wie oben beschrieben), ergänzt um eine Einrichtung, welche die Lockwirkung auf die Insekten (und damit je nach Anwendung, den Fang im Fallensystem oder die Wirkung von attract-and-kill) deutlich erhöht.

Die Erfindung kann in allen Kombinationen mit anderen Systemen, die Insekten anlocken, eingesetzt werden.

Dabei handelt es sich um ein symbiotisches System, bei dem das Zusammenspiel von Botenstoff (Semiochemikalie) und der zusätzlichen Einrichtung die Anlockwirkung deutlich erhöht.

Die erfindungsgemäße Anordnung umfasst eine Quelle, die elektromagnetische Strahlung in einem Frequenzbereich oder mehreren spezifischen Frequenzen (Frequenzband) abgibt ((Multifrequenz)-IR Emitter). Allerdings wird die Anlockwirkung nicht, wie im Stand der Technik, über eine direkte Strahlung erreicht, sondern die Strahlung wird auf ein entsprechendes Objekt (Körper, Prallfläche) gerichtet, welches die elektromagnetische Strahlung in einem insektenrelevanten Spektrum reflektiert. Diese Reflexion der elektromagentischen Strahlung wirkt anlockend auf die Insekten und über diese Reflexion wird die Lockwirkung des (Anlock-) Systems deutlich erhöht. Die von der Quelle für elektromagnetische Strahlung abgegebenen Frequenzen können von Insekt zu Insekt variieren. Bei dem angestrahlten Objekt kann es sich auch um bereits bekannte Insektenfallen oder Anlockeinrichtungen handeln.

Bei der erfindungsgemäßen Anordnung ist die Quelle für Insekten anlockende Strahlung eine Quelle für das Abgegeben elektromagnetischer Strahlung im Bereich Infrarot-Strahlung oder Wärmestrahlung.

Es wurde festgestellt, dass durch die wenigstens eine der Anordnung zum Anlocken von Insekten zugeordnete Quelle für Insekten anlockende Strahlen die Wirksamkeit von mit Botenstoff(en) (Semiochemikalie(n), wie z.B. Pheromonen) bestückten Insektenfallen ganz erheblich gesteigert werden kann.

Insbesondere und beispielsweise ist im Rahmen der Erfindung Strahlung in Betracht gezogen, die wie folgt definiert sind: Unter Infrarotstrahlung (kurz IR-Strahlung, auch Ultrarotstrahlung) werden im Vorliegenden vor allem elektromagnetische Wellen im Spektralbereich zwischen sichtbarem Licht und der längerwelligen Terahertzstrahlung verstanden. Als Infrarot wird der Spektralbereich zwischen 7,8×10⁻⁷ m und 10⁻³ m (780 nm und 1 mm) bezeichnet, was einem Frequenzbereich von 3×10¹¹ Hz bis ca. 4×10¹⁴ Hz (300 GHz bis 400 THz) entspricht.

In der Praxis kann die Insekten anlockende Strahlung abgebende Quelle wenigstens ein elektrischer Heizleiter (Heizdraht, Heizstab, Heizplatte) oder ein elektrischer Widerstandsleiter oder aber wenigstens eine (elektrisch) beheizte Platte sein, die Infrarot-Strahlung und/oder Wärmestrahlung abgeben.

Alternativ und/oder zusätzlich kann bei der erfindungsgemäßen Anordnung die Quelle wenigstens eine diese Strahlung abgebende LED sein.

Für das Zuführen von Energie (elektrische Energie) zu der Quelle, die Insekten anlockende Strahlung abgibt, gibt es verschiedene Möglichkeiten. So können erfindungsgemäßen Anordnungen Stromspeicher in Form von Batterien, Akkumulatoren ebenso zugeordnet sein wie Photovoltaik-Elemente.

Es ist aber auch möglich, die erfindungsgemäße Anordnung aus einem Stromnetz, gegebenenfalls über ein Netzgerät, mit elektrischer Energie zu versorgen, um die wenigstens eine Insekten anlockende Strahlung abgebende Quelle mit Energie zu versorgen.

Weitere Einzelheiten, Merkmale und Vorteile der Erfindung ergeben sich aus der nachstehenden Beschreibung bevorzugter Ausführungsbeispiele, in der auf die schematischen Zeichnungen Bezug genommen wird. Es zeigt
Fig. 1 eine erfindungsgemäße Anordnung mit einer Schlitzfalle,
Fig. 2 eine Einrichtung zum Anlocken und Töten von Insekten mit einem pyramidenförmigen Netz, welche nicht unter die beanspruchte Erfindung fällt,
Fig. 3 eine mit Prallflächen ausgebildete Nassfalle für Borkenkäfer, welche nicht unter die beanspruchte Erfindung fällt,
Fig. 4 eine Segmenttrichterfalle, welche nicht unter die beanspruchte Erfindung fällt,
Fig. 5 eine im Wesentlichen als dreiseitiges Prisma ausgebildete Klebefalle, welche nicht unter die beanspruchte Erfindung fällt,
Fig. 6 eine Flügelfalle-Klebefalle, welche nicht unter die beanspruchte Erfindung fällt,
Fig. 7 eine Prallfalle, welche nicht unter die beanspruchte Erfindung fällt, und
Fig. 8 eine Lampionfalle, welche nicht unter die beanspruchte Erfindung fällt.

Bei allen Ausführungsformen der erfindungsgemäßen Anordnung ist in den Insektenfallen oder Einrichtungen zum Anlocken und Töten von Insekten bevorzugt wenigstens ein Botenstoff (Semiochemikalie, wie z.B. Pheromon) zum Anlocken der Insekten vorgesehen.

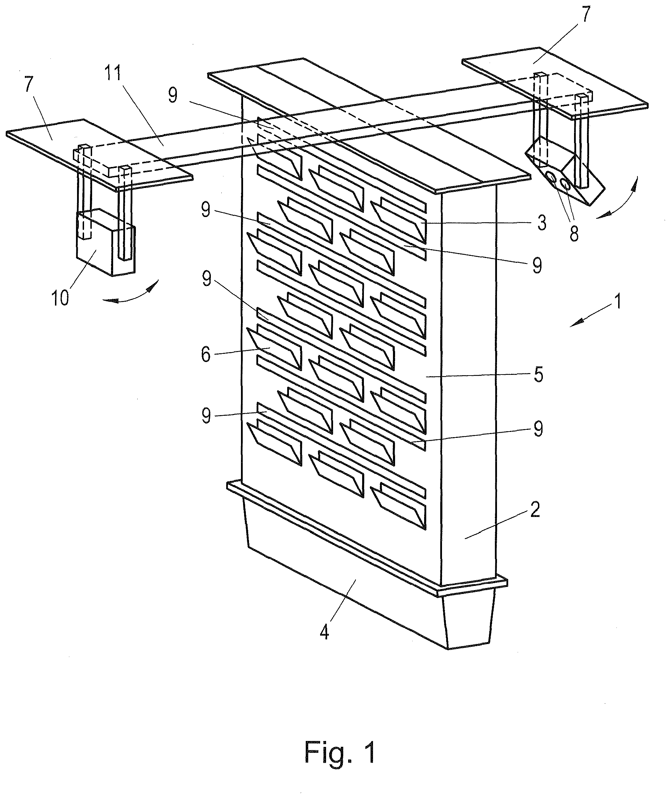

In Figur 1 ist eine an sich bekannte Schlitzfalle 1, insbesondere eine Schlitzfalle für das Fangen von Borkenkäfern, gezeigt. Die Schlitzfalle 1 besitzt einen Grundkörper 2 mit Schlitzen 3, durch die Borkenkäfer in das Innere der Schlitzfalle 1 gelangen, und am unteren Ende einen abnehmbaren Behälter 4, in den die Borkenkäfer fallen und dort gesammelt werden. Im Einzelnen besteht die Schlitzfalle 1 aus der eigentlichen Falle, die ein kastenförmiger Bauteil mit Schlitzen 3 in den Seitenwänden 5 und mit zu den Seitenwänden 5 schräg nach oben weisenden Laschen 6 ist. Am unteren Ende der Schlitzfalle 1 wird in Nuten ein Trichter eingeschoben, unter dem der Behälter 4 angeordnet wird, der ebenfalls in die Nuten eingeschoben sein kann.

Erfindungsgemäß ist die in Fig. 1 gezeigte Schlitzfalle 1 mit Quellen 10 (wenngleich im Beispiel der Fig. 1 zwei Quellen 10 gezeigt sind, genügt oft nur eine Quelle 10) ausgestattet, die Wärme- oder Infrarot-Strahlung abgeben. Diese Quellen 10 sind so angeordnet, dass die Strahlung auf den Grundkörper 2 trifft und von diesem reflektiert werden, sodass Insekten, insbesondere Borkenkäfer, verstärkt angelockt werden und in die Schlitzfalle 1 gelangen.

Die Quellen 10 sind an einem horizontalen Träger 11 über nach unten weisende Stäbe 12 verschwenkbar gehalten, sodass sie für ein optimales Anstrahlen der Schlitzfalle 1 ausgerichtet (geschwenkt) werden können. Zum Schutz vor Niederschlag kann am Träger 11 über den Quellen 10 ein Schutzdach 7 vorgesehen sein.

Jede der elektromagnetische Strahlung abgebenden Quellen 10 ist im Ausführungsbeispiel mit mehreren LEDs 8 bestückt, die voneinander unabhängig aktiviert werden können. Beispielsweise geben die LEDs 8 elektromagnetische Strahlung mit unterschiedlichen Frequenzen ab. So kann die Strahlung durch Wahl der entsprechenden LEDs 8 auf die anzulockenden Insekten abgestimmt werden. Beispielsweise wird für das Anlocken von Borkenkäfern eine elektromagnetische Strahlung mit Wellenlängen von 500 bis 2000 nm gewählt.

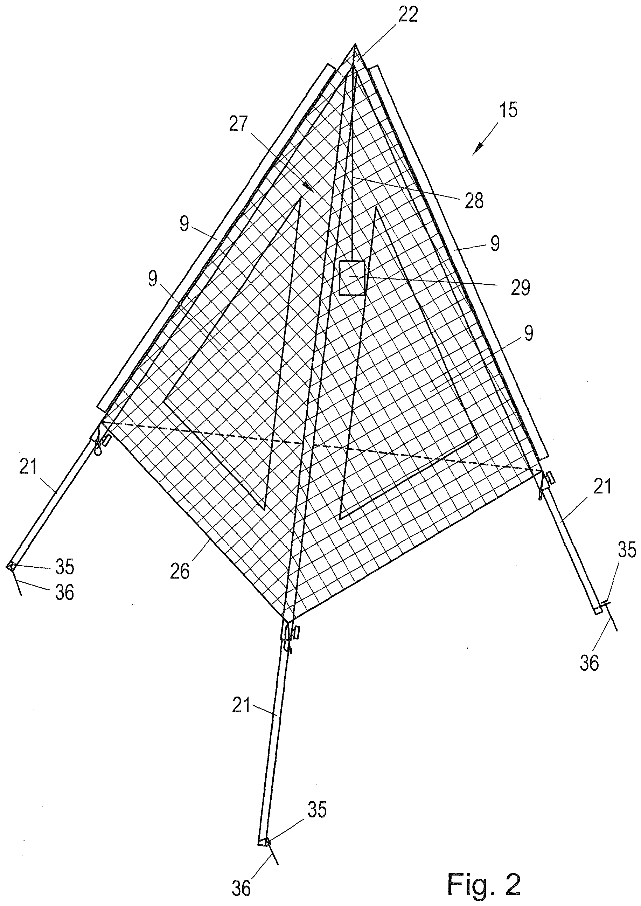

Am Grundkörper 2 der Insektenfalle 1 können Platten angeordnet sein, die als die von der Quelle 10 abgegebene Strahlung reflektierende Flächen 9 ausgebildet sind. Solche Flächen 9 (Platten) sind bei der in Fig. 1 und bei den in den Fig. 2 bis 8 gezeigten Einrichtungen zum Anlocken von Insekten (z.B. Insektenfallen) mit Vorteil vorgesehen, wenn die Einrichtung selbst nicht hinreichend reflektierend ist.

Es ist im Rahmen der Erfindung auch in Betracht gezogen, als Wärme- oder Infrarot-Strahlung abgebende, Insekten anlockende Quellen an Stelle oder zusätzlich zu LEDs 8 mit elektrischer Spannung beaufschlagte Heizleiter, Heizdrähte, Heizstäbe oder Widerstandsleiter zu verwenden.

Die der in Fig. 1 gezeigten Schlitzfalle 1 zugeordneten LEDs 8 können Infrarot-Strahlung abgeben. Es ist grundsätzlich auch möglich, Infrarotstrahlung abgebende LEDs 8 mit Infrarot-Strahlung abgebenden Platten, Heizleitern oder Widerstandsleitern zu kombinieren.

Insbesondere ist im Rahmen der Erfindung in Betracht gezogen, dass die Versorgung der elektromagnetische Strahlung abgebenden Quellen 10 mit elektrischer Energie durch Stromspeicher, wie Batterien oder Akkumulatoren, durch Photovoltaik-Elemente, die gegebenenfalls die Stromspeicher aufladen, oder durch eine externe Stromversorgung erfolgt. Im Falle einer externen Stromversorgung kann vorgesehen sein, dass die erfindungsgemäße Anordnung über Netzgeräte und/oder Stromwandler an ein Stromnetz angeschlossen ist.

Bevorzugt ist es im Rahmen der Erfindung, wenn die Wärmestrahlung bzw. Infrarot-Strahlung abgebenden Quellen 10, insbesondere wenn sie in Form von Platten, Heizleitern, Widerstandsdrähten oder Ähnlichem ausgebildet sind, eine gegenüber der Außentemperatur (geringfügig) erhöhte Temperatur aufweisen. Beispielsweise ist eine um 0,5°C bis 5°C erhöhte Temperatur, insbesondere eine um 2°C erhöhte Temperatur, bevorzugt.

In den Fig. 2 bis 8 sind Beispiele für Insekten anlockende und gegebenenfalls tötende Einrichtungen ("Insektenfallen") gezeigt, die mit elektromagnetische Strahlung abgebenden Quellen 10 kombiniert sein können, welche nicht unter die beanspruchte Erfindung fallen.

Beispielsweise sind die Quellen 10 so ausgebildet und mit Anpassungen an die Einrichtungen der Fig. 2 bis 8 so aufgebaut, wie dies in Fig. 1 für eine Schlitzfalle 1 gezeigt und vorstehend beschrieben worden ist.

Die in Fig. 2 gezeigte Einrichtung 15 zum Anlocken und Töten von Insekten umfasst ein Dreibeingestell, über das ein Netz mit Form einer dreiseitigen Pyramide angeordnet ist. Innerhalb des Netzes ist ein Botenstoff 29 (Semiochemikalie, wie z.B. Pheromone) angeordnet, um Insekten anzulocken.

Im Einzelnen kann die Einrichtung 15 von Fig. 2 wie folgt ausgebildet sein:
Die in Fig. 2 dargestellte Einrichtung 15 weist ein Gestell aus drei Streben oder Stehern 21 auf, die in einem von einem Formstück 22 gebildeten Knoten miteinander verbunden sind.

Das Formstück 22 besteht im dargestellten Ausführungsbeispiel aus drei Rohren, die an einem Ende miteinander verbunden sind.

Das Formstück 22 kann beispielsweise ein Spritzguss-Teil aus Kunststoff oder aus Metall sein. Die Steher 21 sind in die Rohre des Formstückes 22 gesteckt und mit Hilfe von Schrauben festgeklemmt.

Die drei durch das Formstück 22 miteinander verbundenen Steher 21 sind mit einer, im dargestellten Beispiel von einem Netz gebildeten, Umhüllung 26 umgeben, wodurch ein Innenraum 27 geschaffen wird, der nach unten zum Boden hin offen ist. Die Umhüllung 26 erstreckt sich im dargestellten Beispiel über etwa 2/3 der Länge der Steher 21 nach unten. Das Netz der Umhüllung 26 ist mit einem Schädlingsbekämpfungsmittel präpariert, das beispielsweise eine insektizide Wirkung aufweist, so dass die zu bekämpfenden Insekten, wenn sie mit dem Netz der Umhüllung 26 in Berührung kommen, verenden.

Im Innenraum 27 der Umhüllung 26 ist an einer Schnur 28 (oder einem Haken) ein Botenstoff (Semiochemikalie, wie z.B. Pheromone) 29 aufgehängt. Am Formstück 22 ist im Bereich des oberen Endes ein Haken angebracht, in den die Schnur 28 eingehängt werden kann. Der Botenstoff 29 lockt Insekten an, damit diese mit dem Netz der Umhüllung 26 und dem daran angebrachten Wirkstoff in Berührung kommen. Wenn die Insekten unter dem Netz der Umhüllung 26 durchfliegen und in den Innenraum 27 gelangen, werden sie ebenfalls früher oder später mit dem präparierten Netz der Umhüllung 26 in Berührung kommen, wodurch die erwünschte Wirkung eintreten wird.

Die Steher 21 können, wie in Fig. 2 zu sehen ist, jeweils aus zwei teleskopartig ineinander-schiebbaren Rohren zusammengebaut sein, wobei das untere Rohr in das obere Rohr hineingesteckt wird und dort mit Hilfe einer Flügelschraube festgeklemmt werden kann. Dadurch ist es möglich, die Länge der Steher 21 den jeweiligen Umgebungsbedingungen (geneigtes oder unebenes Gelände) bzw. Wünschen anzupassen.

Die Abmessungen des Netzes der Umhüllung 26 und des oberen Rohres sind so aufeinander abgestimmt, dass das Netz der Umhüllung 26 knapp oberhalb der Schraube oder der Flügelschraube endet. Am unteren Rand des Netzes der Umhüllung 26 sind im Bereich der Steher 21 Schnüre oder dergleichen angebracht, mit denen das Netz der Umhüllung 26 nach unten gespannt und an den Schrauben festgebunden werden kann.

An den unteren, bodennahen Enden der Steher 21 sind Ösen 35 angebracht, beispielsweise angeschweißt oder angeschraubt, durch die Erdnägel 36, Heringe oder dergleichen gesteckt werden können, um die Steher 21 und somit das Gestell im Boden zu verankern.

Das Anlocken von Insekten ist bei dem in Fig. 2 gezeigten Beispiel einer Einrichtung 15 dadurch verstärkt, dass in einer, zwei oder allen drei Seiten des Netzes 26 und/oder im Bereich wenigstens eines Stehers 21 Insekten anlockende, elektromagnetische Strahlung reflektierende Flächen 9 angeordnet sind. Diese Flächen 9 sind im einfachsten Fall Infrarot-Strahlung reflektierende Platten.

Wenn reflektierende Flächen 9 vorgesehen sind, können diese etwa die Größe und Form der Seitenflächen der Umhüllung 26 haben und sind bevorzugt im Innenraum 7 der Einrichtung 15 (also innerhalb der Umhüllung 26) angeordnet. Dabei können reflektierende Flächen 9 bildende Platten einer, zwei oder allen drei Seitenflächen der Umhüllung 26 zugeordnet sein.

Im Übrigen kann bei dem in Fig. 2 gezeigten Beispiel die Quelle 10 für Insekten anlockende, elektromagnetische Strahlung so angeordnet, ausgebildet, betrieben und mit Energie beaufschlagt sein, wie dies im Zusammenhang mit Fig. 1 beschrieben worden ist.

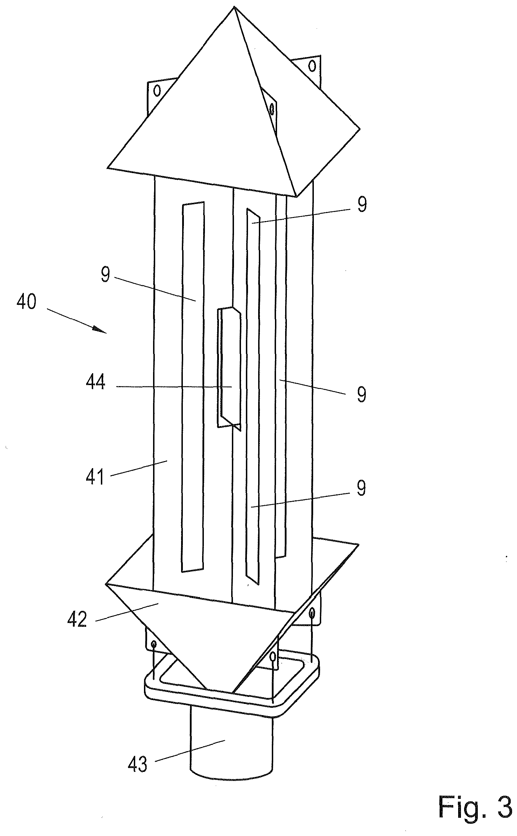

In Fig.3 ist eine Borkenkäfer-Nass-Falle 40 mit sternförmig angeordneten Prallflächen 41 gezeigt. Am unteren Ende der Prallflächen 41 sind ein Trichter 42 und unterhalb derselben ein Sammelgefäß 43 für gefangene Insekten vorgesehen.

Gemäß Beispiel ist die in Fig. 3 gezeigte Insektenfalle 40 an einer, zwei, drei oder an allen vier Prallflächen 41 mit reflektierende Flächen 9 bildenden Platten für die Reflexion von Insekten anlockenden, elektromagnetischen Strahlungen ausgestattet. Dies können beispielsweise an jeder Seite streifenförmige Infrarot- und/oder Wärmestrahlung reflektierende Platten sein. Es besteht auch die Möglichkeit, beidseits der Öffnungen 44 in den Prallflächen 41 der in Fig. 3 gezeigten Insektenfalle 40 Flächen 9 für das Reflektieren von Insekten anlockender elektromagnetischer Strahlung vorzusehen.

Auch bei der in Fig. 3 gezeigten Insektenfalle 40 kann die Quelle 10 für Insekten anlockende, elektromagnetische Strahlung so angeordnet, ausgebildet, betrieben und mit Energie beaufschlagt sein, wie dies im Zusammenhang mit Fig. 1 beschrieben worden ist.

Auch die in Fig. 3 gezeigte Insektenfalle 40 ist mit einem Botenstoff (Semiochemikalie, wie z.B. Pheromone) ausgestattet.

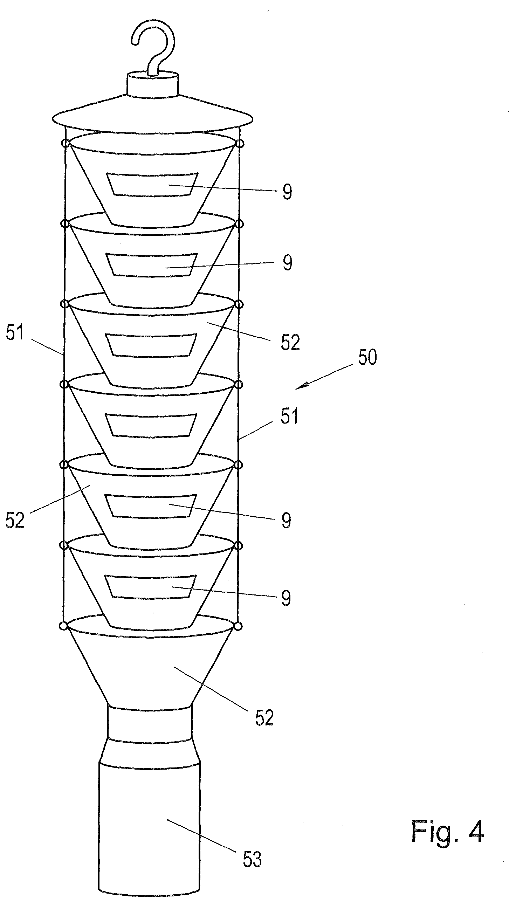

Fig. 4 zeigt eine Einrichtung, die als Segmenttrichterfalle 50 ausgebildet ist. Diese Falle 50 umfasst mehrere übereinander angeordnete und miteinander durch Schnüre 51 verbundene Trichter 52 und am unteren Ende einen Auffangbehälter 53 für gefangene Insekten.

In der in Fig. 4 gezeigten Segmenttrichterfalle 50 ist ein Botenstoff (Semiochemikalie, wie z.B. Pheromone) untergebracht.

Gemäß Beispiel sind insbesondere ringförmig ausgebildete Platten als reflektierende Flächen 9 für Insekten anlockende, elektromagnetische Strahlung (Wärmestrahlung, Infrarot-Strahlung, Ultraviolett-Strahlung) an den oberen, weiteren Enden der Trichter 52 angeordnet.

Das Versorgen der Quellen 10 für Insekten anlockende, elektromagnetische Strahlung kann wie anhand von Fig. 1 beschrieben erfolgen. Im Übrigen kann bei dem in Fig. 4 gezeigten Beispiel die Quelle 10 für Insekten anlockende, elektromagnetische Strahlung so angeordnet, ausgebildet, betrieben und mit Energie beaufschlagt sein, wie dies im Zusammenhang mit Fig. 1 beschrieben worden ist.

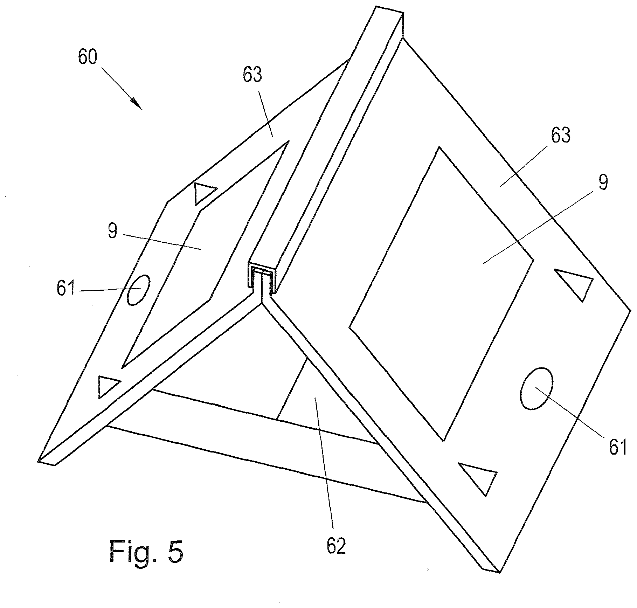

Die in Fig. 5 gezeigte, als Klebefalle 60 ausgebildete Insektenfalle umfasst ein im Wesentlichen dreiseitiges Prisma 61, wobei innerhalb des Prisma 61 ein Botenstoff (Semiochemikalie, wie z.B. Pheromone) vorgesehen ist und die Falle 60 einen Klebeboden 62 aufweist. Der fertig beleimte und austauschbare Klebeboden 62 hat zur Folge, dass Insekten (Falter oder Blattwespen) durch das Pheromon und die Quelle 10 für Insekten anlockende Strahlung in die Falle 60 gelockt und von dem Klebeboden 62 gefangen werden.

Gemäß dem Beispiel ist an wenigstens einer, aber vorzugsweise beiden nach oben weisenden Wänden 63 der in Fig. 5 gezeigten Insektenfalle 60 je wenigstens eine Fläche 9, insbesondere in Form wenigstens einer Platte, vorgesehen, welche die Insekten anlockende, elektromagnetische Strahlung reflektiert.

Ausgestaltung und Art der Quellen 10 und deren Versorgung mit Energie kann so wie anhand von Fig. 1 beschrieben ausgeführt sein. Im Übrigen kann bei dem in Fig. 5 gezeigten Beispiel die Quelle 10 für Insekten anlockende, elektromagnetische Strahlung so angeordnet, ausgebildet, betrieben und mit Energie beaufschlagt sein, wie dies im Zusammenhang mit Fig. 1 beschrieben worden ist.

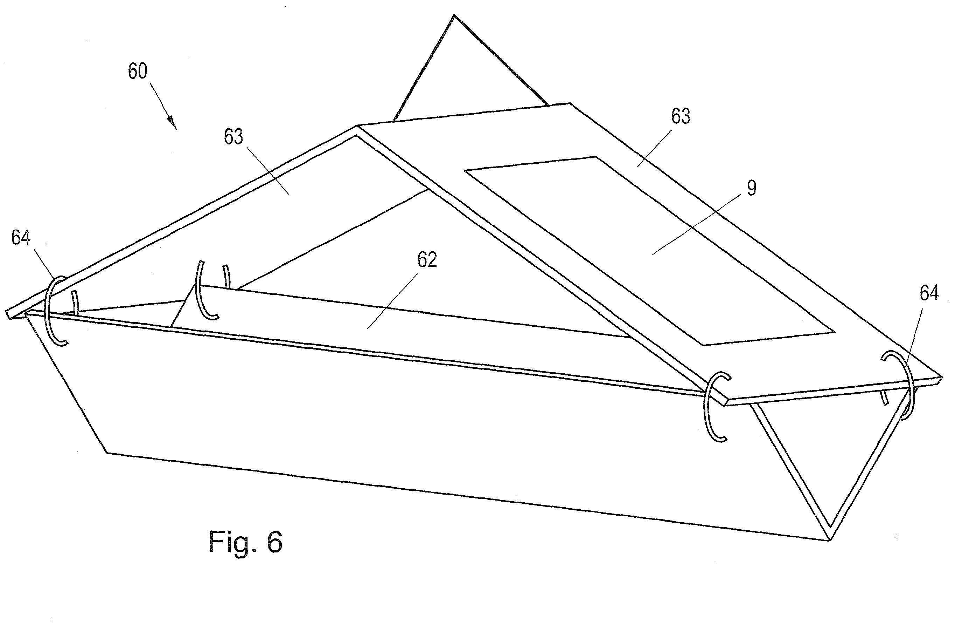

Die in Fig. 6 gezeigte Flügelfalle-Klebefalle 60, die als Insektenfalle verwendet werden kann, ist ähnlich ausgebildet wie die Insektenfalle von Fig. 5. Bei der in Fig. 6 gezeigten Insektenfalle ist der Boden 62 gewinkelt ausgebildet und mit den unteren Rändern der Wände 63 durch Ringe 64, die Federringe sein können, verbunden. An den Wänden 63 sind reflektierende Flächen 9, z.B. in Form von Platten, vorgesehen. Im Übrigen ist die Flügelfalle-Klebefalle 60 von Fig. 6 so aufgebaut, wie dies vorstehend für die in Fig. 5 gezeigte Klebefalle 60 beschrieben worden ist. Im Übrigen kann bei der in Fig. 6 gezeigten Ausführungsform die Quelle 10 für Insekten anlockende, elektromagnetische Strahlung so angeordnet, ausgebildet, betrieben und mit Energie beaufschlagt sein, wie dies im Zusammenhang mit Fig. 1 und Fig. 5 beschrieben worden ist.

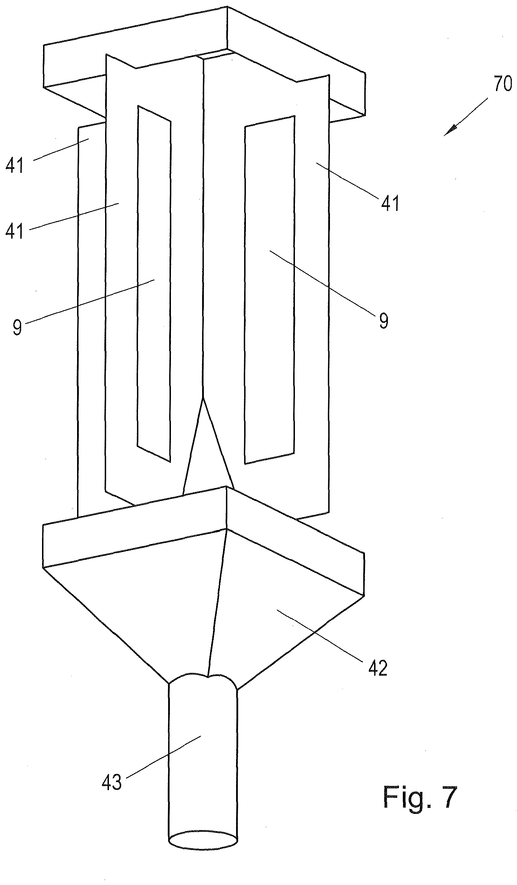

In Fig. 7 ist eine Prallfalle 70 gezeigt. Die Prallfalle 70 weist vier sternförmig angeordnete Prallflächen 41 auf. Am unteren Ende der Prallflächen 41 ist ein Trichter 42 und unter diesem ein Sammelgefäß 43 vorgesehen, in das die gefangenen Insekten fallen. Wenigstens einer der Prallflächen 41 ist wenigstens eine Quelle für elektromagnetische, Insekten anlockende Strahlung zugeordnet. Im Beispiel der Fig. 7 sind Infrarot-Strahlung reflektierende Flächen 9 (Platten) vorgesehen. Im Übrigen kann bei dem in Fig. 7 gezeigten Beispiel die Quelle 10 für Insekten anlockende, elektromagnetische Strahlung so ausgebildet, betrieben und mit Energie beaufschlagt sein, wie dies im Zusammenhang mit Fig. 1 beschrieben worden ist.

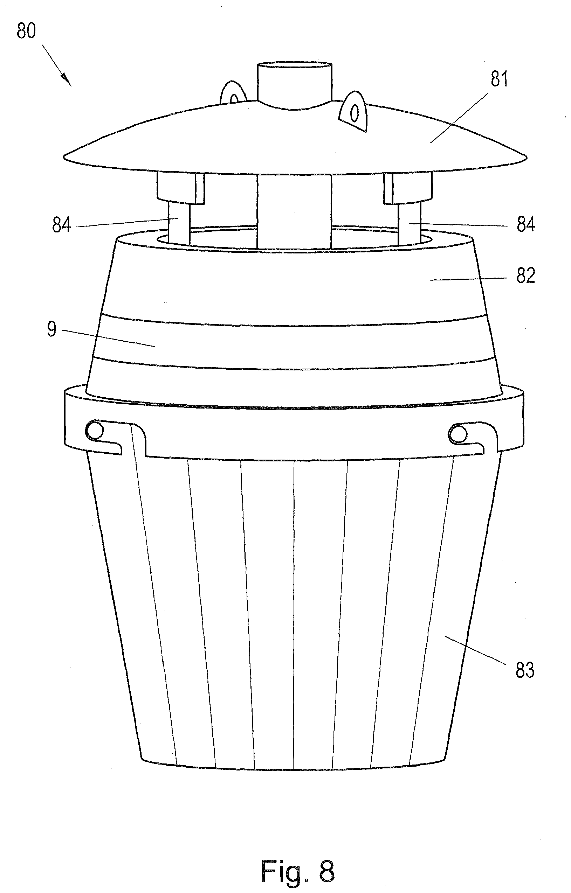

Bei der in Fig. 8 gezeigten Insektenfalle handelt es sich um einen Fallenlampion 80 (auch Lampionfalle genannt). Der Fallenlampion 80 weist unter einem Schutzdach 81 einen nach oben offenen, sich nach unten hin konisch erweiternden Teil 82 und unterhalb desselben einen Sammelbehälter 83 für gefangene Insekten auf. Das Schutzdach 81 ist mit den anderen Teilen des Fallenlampions 80 über stabförmige Verbindungselemente 84 verbunden. An beliebigen Stellen des Fallenlampions 80 sind Quellen für Insekten anlockende, elektromagnetische Strahlung angebracht. Im Beispiel sind am Teil 82 ringförmige, elektromagnetische Strahlung reflektierende Flächen 9 (Platten) angeordnet. Im Übrigen kann bei dem in Fig. 8 gezeigten Beispiel die Quelle 10 für Insekten anlockende, elektromagnetische Strahlung so angeordnet, ausgebildet, betrieben und mit Energie beaufschlagt sein, wie dies im Zusammenhang mit Fig. 1 beschrieben worden ist.

## Patentansprüche

1. Anordnung zum Anlocken von Insekten mit einer Quelle (10) für Insekten anlockende elektromagnetische Strahlung,
wobei die Quelle (10) mit Abstand von einer Insektenfalle (1) zum Anlocken oder zum Anlocken und Töten von Insekten angeordnet ist und die Strahlung auf die Insektenfalle (1) gerichtet abgibt,
wobei die Insektenfalle eine Schlitzfalle (1) für das Fangen von Borkenkäfern ist, die einen Grundkörper (2) mit Schlitzen (3) und am unteren Ende einen abnehmbaren Behälter (4), in den
die Borkenkäfer fallen, aufweist,
wobei die Quelle (10) eingerichtet ist die Strahlung als Wärme- oder Infrarotstrahlung auf den Grundkörper (2) abzugeben und wobei der Grundkörper eingerichtet ist, die Strahlung zur verstärkten Anlockung von Borkenkäfern zu reflektieren.

2. Anordnung nach Anspruch 1, **dadurch gekennzeichnet, dass** die Quelle für Infrarot-Strahlung oder Wärmestrahlung wenigstens einen elektrischen Widerstandsleiter, wenigstens einen Heizleiter oder wenigstens eine beheizte Platte umfasst.

3. Anordnung nach einem der Ansprüche 1 oder 2, **dadurch gekennzeichnet, dass** die Quelle (10) wenigstens eine die Strahlung abgebende LED umfasst.

4. Anordnung nach Anspruch 1, **dadurch gekennzeichnet, dass** der Insektenfalle (1, 40, 50, 60, 70, 80) ein Botenstoff in Form einer Semiochemikalie, wie z. B. Pheromone, zugeordnet ist.

5. Anordnung nach einem der Ansprüche 1 bis 4, **dadurch gekennzeichnet, dass** die Anordnung eine Stromquelle umfasst.

6. Anordnung nach Anspruch 5, **dadurch gekennzeichnet, dass** die Stromquelle ein Stromspeicher ist.

7. Anordnung nach Anspruch 6, **dadurch gekennzeichnet, dass** dem Stromspeicher wenigstens ein photovoltaisches Element zugeordnet ist.

8. Anordnung nach Anspruch 5, **dadurch gekennzeichnet, dass** die Stromquelle ein an ein Stromnetz anzuschließendes Netzgerät ist.

9. Anordnung nach einem der Ansprüche 1 bis 8, **dadurch gekennzeichnet, dass** die Quelle für elektromagnetische Strahlung zwei oder mehr als zwei Strahlungsquellen aufweist, die Strahlungen mit voneinander unterschiedlichen Wellenlängen abgebende LEDs umfasst.

10. Anordnung nach Anspruch 9, **dadurch gekennzeichnet, dass** die Quelle für elektromagnetische Strahlung zwei oder mehr als zwei LEDs, die Strahlungen mit voneinander unterschiedlichen Wellenlängen abgeben, umfasst.

11. Anordnung nach einem der Ansprüche 9 oder 10, **dadurch gekennzeichnet, dass** die LEDs voneinander unabhängig aktivierbar sind.

## Claims

1. Arrangement for attracting insects, comprising a source (10) of insect-attracting electromagnetic radiation,
wherein the source (10) is arranged at a distance from an insect trap (1) for attracting insects or for attracting and killing insects and emits radiation in a manner directed towards the insect trap (1),
wherein the insect trap is a slit trap (1) for catching bark beetles, which has a main body (2) with slits (3) and, at the lower end, a removable container (4) into which the bark beetles fall,
wherein the source (10) is configured to emit the radiation as heat radiation or infrared radiation towards the main body (2), and wherein the main body is configured to reflect the radiation in order to attract bark beetles to an enhanced degree.

2. Arrangement according to claim 1, **characterized in that** the source of infrared radiation or heat radiation comprises at least one electrical resistor conductor, at least one heating conductor or at least one heated plate.

3. Arrangement according to one of claims 1 or 2, **characterized in that** the source (10) comprises at least one LED which emits the radiation.

4. Arrangement according to claim 1, **characterized in that** the insect trap (1, 40, 50, 60, 70, 80) is assigned an attracting substance in the form of a semiochemical, such as pheromones for example.

5. Arrangement according to one of claims 1 to 4, **characterized in that** the arrangement comprises a power source.

6. Arrangement according to claim 5, **characterized in that** the power source is a power store.

7. Arrangement according to claim 6, **characterized in that** at least one photovoltaic element is coordinated to the power store.

8. Arrangement according to claim 5, **characterized in that** the power source is a power supply unit for connection to a power grid.

9. Arrangement according to one of claims 1 to 8, **characterized in that** the source of electromagnetic radiation comprises two or more than two radiation sources comprising LEDs which emit radiations having wavelengths that differ from one another.

10. Arrangement according to claim 9, **characterized in that** the source of electromagnetic radiation comprises two or more than two LEDs which emit radiations having wavelengths that differ from one another.

11. Arrangement according to one of claims 9 or 10, **characterized in that** the LEDs can be activated independently of one another.

## Revendications

1. Dispositif pour attirer des insectes avec une source (10) de rayonnement électromagnétique attirant les insectes,
dans lequel la source (10) est disposée à distance d'un piège à insectes (1) destiné à attirer ou à attirer et tuer des insectes et le rayonnement est émis de façon directionnelle vers le piège à insectes (1),
dans lequel le piège à insectes est un piège à fentes (1) pour la capture de scolytes, qui comporte un corps (2) muni de fentes (3) et une boîte (4) amovible à une extrémité, dans laquelle les scolytes tombent,
dans lequel la source (10) est configurée pour émettre le rayonnement sous forme de chaleur ou d'infrarouges vers le corps (2), lequel corps est configuré pour réfléchir le rayonnement afin d'attirer plus fortement les scolytes.

2. Dispositif selon la revendication 1, **caractérisé en ce que** la source de rayonnement infrarouge ou de rayonnement de chaleur comprend au moins un conducteur de résistance électrique, au moins un conducteur chauffant ou au moins une plaque chauffée.

3. Dispositif selon l'une des revendications 1 ou 2, **caractérisé en ce que** la source (10) comprend au moins une DEL émettant le rayonnement.

4. Dispositif selon la revendication 1, **caractérisé en ce que** le piège à insectes (1, 40, 50, 60, 70, 80) est associé à un attracteur chimique prenant la forme d'une substance sémiochimique, par exemple de phéromones.

5. Dispositif selon l'une des revendications 1 à 4, **caractérisé en ce qu'**il comprend une source de courant.

6. Dispositif selon la revendication 5, **caractérisé en ce que** la source de courant est un accumulateur de courant.

7. Dispositif selon la revendication 6, **caractérisé en ce que** au moins un élément photovoltaïque est associé à l'accumulateur de courant.

8. Dispositif selon la revendication 5, **caractérisé en ce que** la source de courant est un bloc d'alimentation par le réseau à raccorder à un réseau électrique.

9. Dispositif selon l'une des revendications 1 à 8, **caractérisé en ce que** la source de rayonnement électromagnétique présente deux ou plus de deux sources de rayonnement qui comprennent des DEL émettant des rayonnements à des longueurs d'ondes différentes les unes des autres.

10. Dispositif selon la revendication 9, **caractérisé en ce que** la source de rayonnement électromagnétique présente deux ou plus de deux DEL émettant des rayonnements à des longueurs d'ondes différentes les unes des autres.

11. Dispositif selon l'une des revendications 9 ou 10, **caractérisé en ce que** les DEL peuvent être activées indépendamment les unes des autres.
